# EUROPÄISCHE PATENTSCHRIFT

(11) **EP 2 768 677 B1**
(45) Veröffentlichungstag und Bekanntmachung des Hinweises auf die Patenterteilung: **06.07.2016**
(21) Anmeldenummer: 12773208.9
(22) Anmeldetag: 24.09.2012
(51) Int. Cl.: B42D 25/00, B42D 25/29, B05D 5/06, C09D 7/12, C09D 11/037, C09D 11/50

(54) **OPTISCH VARIABLES SICHERHEITSELEMENT MIT MIKROKAPSELBASIERTER FARBSCHICHT UND VERFAHREN ZU DESSEN HERSTELLUNG**
OPTICALLY VARIABLE SECURITY ELEMENT WITH AN INK LAYER BASED ON MICROCAPSULES AND PROCESS FOR PRODUCING THE SAME
ÉLÉMENT DE SÉCURITÉ OPTIQUEMENT VARIABLE AVEC UNE COUCHE & xA;D'ENCRE SUR LA BASE DE MICROCAPSULES ET PROCÉDÉ DE SON FABRICATION

(30) Priorität: 20.10.2011 DE 102011116488
(43) Veröffentlichungstag der Anmeldung: 27.08.2014
(73) Patentinhaber: Giesecke & Devrient GmbH, 81677 München (DE)
(72) Erfinder: BORNSCHLEGL, Alexander, 81735 München (DE); MENGEL, Christoph, 83607 Holzkirchen (DE)
(86) Internationale Anmeldenummer: PCT/EP2012/003983
(87) Internationale Veröffentlichungsnummer: WO 2013/056778

(56) Entgegenhaltungen:
- WO-A1-2010/142391
- GB-A- 2 168 163
- US-A- 4 722 921

## Beschreibung

Die Erfindung betrifft ein optisch variables Sicherheitselement mit einer mikrokapselbasierten Farbschicht. Die Erfindung betrifft ferner ein Verfahren zur Herstellung eines derartigen Sicherheitselements, eine Sicherheitsanordnung mit einem solchen Sicherheitselement und einen entsprechend ausgestatteten Datenträger.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgedruckten Merkmalsbereichs ausgebildet sein.

Eine besondere Rolle bei der Echtheitsabsicherung spielen Sicherheitselemente, die betrachtungswinkelabhängige visuelle Effekte zeigen, da diese selbst mit modernsten Kopiergeräten nicht reproduziert werden können. Für diesen Zweck werden seit einiger Zeit auch verkapselte magnetisch ausrichtbare Effektpigmente eingesetzt, die magnetisch in Form eines darzustellenden Motivs ausgerichtet werden können.

WO 2010/142391 A1 offenbart ein Sicherheitselement mit einem durch ein externes Magnetfeld veränderbaren optischen Erscheinungsbild, wobei das Sicherheitselement eine Vielzahl von Mikrokapseln aufweist, die eine Suspension aus einer Trägerflüssigkeit und magnetischen Nanopartikeln enthalten, welche in einem externen Magnetfeld in den Mikrokapseln reversibel einen photonischen Kristall ausbilden. Die Mikrokapseln können einen aktivierbaren Fixierstoff enthalten, durch dessen Aktivierung die magnetischen Nanopartikel in ihrer gegenwärtigen Position fixierbar sind. Die Mikrokapseln können bereichsweise in Form von Mustern, Zeichen oder einer Codierung zerstört oder modifiziert sind, so dass das optische Erscheinungsbild des Sicherheitselement in den zerstörten Bereichen durch das externe Magnetfeld nicht veränderbar ist, bzw. in den modifizierten Bereichen ein geändertes Ansprechverhalten auf das externe Magnetfeld aufweist.

US 4,722,921 offenbart ein hitzesensitives Aufzeichnungsmaterial umfassend eine Unterlage mit einer darauf bereitgestellten hitzesensitiven Aufzeichnungsschicht, die Mikrokapseln beinhaltet, die einen Farbbildner und ein organisches Lösungsmittel als Kernmaterialien und einen dazu außenliegenden Farbentwickler beinhaltet. Die Wand der Mikrokapseln ist undurchdringlich für den Farbbildner sowie für den Farbentwickler bei Raumtemperatur, jedoch bei Anwendung von Hitze wird sie zumindest für einen von beiden durchlässig. Die hitzesensitive Aufzeichnungsschicht beinhaltet weiterhin ein Pigment mit einer durchschnittlichen Partikelgröße, die größer als die der Mikrokapseln ist.

Ausgehend davon liegt der Erfindung die Aufgabe zugrunde, optisch variable Sicherheitselemente mit einer mikrokapselbasierten Farbschicht weiter zu verbessern und insbesondere, optisch variable Sicherheitselemente mit attraktivem visuellem Erscheinungsbild und hoher Fälschungssicherheit anzugeben.

Diese Aufgabe wird durch die Merkmale der unabhängigen Ansprüche gelöst. Weiterbildungen der Erfindung sind Gegenstand der Unteransprüche.

Die Erfindung offenbart ein Verfahren zur Herstellung eines optisch variablen Sicherheitselements mit einer mikrokapselbasierten Farbschicht mit einem Motivbereich in Form von Mustern, Zeichen oder einer Codierung. Bei dem Verfahren ist vorgesehen, dass
D) eine Druckfarbe bereitgestellt wird, die in einem Bindemittel eine Vielzahl von Mikrokapseln enthält, die jeweils eine semipermeable Kapselhülle aufweisen, die für vorbestimmte reaktive Substanzen durchlässig ist, und die eine in der Kapselhülle eingeschlossene Trägerflüssigkeit und einen durch externe elektrische oder magnetische Felder beeinflussbaren Kapselinhalt aufweisen, welcher in der Mikrokapsel im Wesentlichen frei beweglich ist,
A) die Druckfarbe auf einen Untergrund aufbracht wird um eine mikrokapselbasierte Farbschicht zu bilden,
R) in dem Motivbereich eine Schicht mit den vorbestimmten reaktiven Substanzen auf die mikrokapselbasierte Farbschicht aufgebracht wird, welche durch die semipermeablen Kapselhüllen in die Mikrokapseln der Farbschicht eindringen,
M) in einem den Motivbereich enthaltenden Teilbereich der Farbschicht ein externes elektrisches oder magnetisches Feld angelegt wird, um dort den beweglichen Kapselinhalt zu beeinflussen, und
H) die in die Mikrokapsel eingedrungenen reaktiven Substanzen gehärtet werden, um den Kapselinhalt in der Mikrokapsel in seiner beeinflussten Lage zu fixieren.

Unter einer Beeinflussung des Kapselinhalts wird insbesondere eine Veränderung der relativen Position und/ oder der Ausrichtung des Kapselinhalts innerhalb der Kapsel verstanden. Beispielsweise kann der Kapselinhalt durch nicht-sphärische Plättchen gebildet sein, deren Ausrichtung durch ein externes elektrisches oder magnetisches Feld verändert werden kann. Gemäß einer speziellen Ausführungsform ist es denkbar, ein Sicherheitselement anzugeben, bei dem als nicht-sphärische Plättchen, insbesondere Pigmente, Plättchen bzw. Pigmente mit unterschiedlichen Eigenschaften, insbesondere unterschiedlichen magnetischen Eigenschaften, verwendet werden, so dass aufgrund dieser unterschiedlichen Eigenschaften der nicht-sphärischen Plättchen/Pigmente eine erste und zweite Information in das Sicherheitselement eingebracht werden kann. In anderen Gestaltungen besteht der Kapselinhalt aus kleinen Partikeln, deren Position innerhalb der Kapseln durch ein externes elektrisches oder magnetisches Feld verändert werden kann. Der Kapselinhalt kann dabei auch verschiedene Partikel umfassen, die von dem externen Feld unterschiedlich beeinflusst werden. Beispielsweise kann eine Partikelsorte durch das externe Feld nach oben und eine andere Partikelsorte nach unten getrieben werden. Durch unterschiedliche Partikelfarben lassen sich so durch externe Felder unterschiedliche visuelle Eindrücke erzeugen.

In wiederum anderen Gestaltungen kann der Kapselinhalt aus kleinen Partikeln bestehen, deren Anordnung zueinander durch ein externes elektrisches oder magnetisches Feld verändert werden kann. Beispielsweise können die Partikel beim Anlegen eines Felds von einem ungeordneten in einen geordneten Zustand übergehen und etwa eine Überstruktur, insbesondere einen photonischen Kristall ausbilden, wie weiter unten genauer geschildert. Es versteht sich, dass Position und Ausrichtung durch das externe Feld auch zugleich geändert werden können.

Die Kapselhülle ist im Rahmen der Erfindung semipermeabel, das heißt, sie ist für eine oder mehrere Verbindungsklassen oder Verbindungstypen durchlässig, für andere dagegen nicht. Die semipermeable Kapselhülle kann beispielsweise nach Molekülgröße und/ oder Polarität und/ oder Ladungszustand selektieren. Bevorzugt ist die semipermeable Kapselhülle für kleine unpolare Substanzen durchlässig, für polare Substanzen dagegen undurchlässig. Die Semipermeabilität der Kapselhülle muss nicht ausschließlich von der Kapselhülle selbst herrühren, sondern es ist auch möglich, dass die Trägerflüssigkeit oder das Bindemittel der Farbschicht zur Semipermeabilität der Kapselhülle beiträgt oder diese sogar überwiegend ausmacht. Beispielsweise kann die Trägerflüssigkeit einen stark hydrophoben Charakter aufweisen, und dazu beispielsweise Kohlenwasserstoffe oder geeignete Triglyceride enthalten. Diese verhindern wirksam das Eindringen stark polarer Substanzen in die Kapsel, während unpolare Stoffe ohne Weiteres durch die Kapselhülle ins Innere eindringen können.

Im Schritt R) werden als reaktive Substanzen vorzugsweise strahlenhärbare Acrylate aufgebracht. Vorteilhaft enthalten die reaktiven Substanzen ein- und/oder zwei- und/oder mehrfunktionale Monomere oder Oligomere. Insbesondere werden als reaktive Substanzen mit Vorteil hydrophobe Monomere aufgebracht, die zweckmäßig ein kleines Molekulargewicht und/ oder eine geringe Oberflächenspannung aufweisen. Das Molekulargewicht liegt dabei bevorzugt unterhalb von 500 g/mol, besonders bevorzugt unterhalb von 250 g/mol. Die Oberflächenspannung liegt bevorzugt unterhalb von 38 dyn/cm, besonders bevorzugt unterhalb von 32 dyn/cm.

Einige Beispiele geeigneter reaktiver Substanzen sind Isobornylacrylat, Isooctylacrylat, Laurylacrylat, Hexandioldiacrylat, Isodecylacrylat und Tertiobutylcyclohexanolacrylat. Auch viele als Reaktionsverdünner bekannte Substanzen, wie etwa Vinylcaprolactam oder Vinylpyrrolidon, eignen sich im Rahmen der Erfindung als reaktive Substanzen.

Die reaktiven Substanzen werden in Schritt R) zweckmäßig aufgedruckt. Durch die zur Verfügung stehenden hochauflösenden Drucktechniken können so hochauflösende Motivbereiche beliebiger Form erzeugt werden. Für die Aufbringung der reaktiven Substanzen in Schritt R) sind als Drucktechniken Flexodruck und Siebdruck besonders bevorzugt, denkbar ist allerdings auch die Aufbringung im Nassoffsetdruck oder Trockenoffsetdruck. Die mit der jeweiligen Drucktechnik zu erreichende maximale Auflösung wird in erheblichem Maße von der Größe der Mikrokapseln und dem Anteil an Mikrokapseln in der Druckfarbe bestimmt. Allgemein lässt sich allerdings festhalten, dass mit der erfindungsgemäßen Technik die maximale Auflösung insbesondere über die erreichbare minimale Linienbreite angegeben werden kann. Die minimale Linienbreite liegt bevorzugt im Bereich von 0,1 mm bis 0,3 mm, so dass die erzeugten Motivbereiche in der Regel auch noch mit dem unbewaffneten Auge zu erkennen sind.

Nach dem Aufbringen der reaktiven Substanzen in Schritt R) wird zweckmäßig eine vorbestimmte Wartezeit abgewartet, bevor in Schritt H) gehärtet wird, um sicherzustellen, dass die reaktiven Substanzen in die Mikrokapseln eingedrungen sind. Um die Wartezeit zu verkürzen, wird mit Vorteil während der Wartezeit eine Temperaturbeaufschlagung durchgeführt, insbesondere durch Beaufschlagung mit Infrarotstrahlung und/oder Heißluft.

Bei einer vorteilhaften Verfahrensführung erfolgt die Härtung in Schritt H) während das externe elektrische oder magnetische Feld des Schritts M) angelegt ist. Anzumerken ist, dass die Härtung in Schritt H) mit jeder geeigneten elektromagnetischen Strahlung bzw. Strahlungsquelle erfolgen kann. Wie weiter unten ausgeführt, ist eine Härtung insbesondere mittels UV-Strahlung möglich. Diese kann bevorzugt mittels eines UV-Lasers erfolgen, denkbar ist aber auch eine Belichtung mit UV-Strahlung, die durch geeignete UV-Lampen erzeugt wird, wobei in einem solchen Fall auch geeignete Masken eingesetzt werden können.

Gemäß einer bevorzugten Verfahrensvariante wird in Schritt D) eine Druckfarbe bereitgestellt, bei der die Mikrokapseln als Kapselinhalt magnetisch ausrichtbare, nicht-sphärische Pigmente enthalten, die in der Trägerflüssigkeit der Mikrokapseln im Wesentlichen frei drehbar und durch ein äußeres Magnetfeld reversibel ausrichtbar sind. Im Schritt M) wird dann in dem den Motivbereich enthaltenden Teilbereich der Farbschicht ein externes magnetisches Feld angelegt, um dort die drehbaren Pigmente auszurichten.

Die nicht-sphärischen Pigmente sind mit besonderem Vorteil plättchenförmig ausgebildet, wobei das Verhältnis des größten zum kleinsten Durchmesser (Durchmesser-zu-Dickenverhältnis) mehr als 4:1, bevorzugt mehr als 10:1 beträgt und besonders bevorzugt zwischen 20:1 und 200:1 liegt. Der größte Durchmesser der nicht-sphärischen Pigmente liegt bevorzugt zwischen 2 µm und 150 µm, insbesondere zwischen 5 µm und 50 µm.

In einer bevorzugten Ausführungsform ist vorgesehen, dass die Pigmente durch eine geeignete Behandlung, insbesondere der Beschichtung der Oberfläche der Pigmente, stabilisiert werden, so dass die magnetischen und optisch variablen Eigenschaften der erfindungsgemäßen Pigmente möglichst lange aufrechterhalten werden können. Denkbar ist es ferner, die Mikrokapseln im Allgemeinen bzw. die Pigmente im Speziellen durch einen der Trägerflüssigkeit zugesetzten Stabilisator zu stabilisieren.

Vorzugsweise werden die drehbaren Pigmente im Schritt M) zumindest in einem Teil des Motivbereichs parallel zur Ebene der Farbschicht ausgerichtet und im Schritt H) in dieser Ausrichtung fixiert. Die parallele Ausrichtung erzeugt durch ein kollektives Zusammenwirken der Pigmente für den Betrachter einen besonders brillanten optischen Effekt. Bei einer anderen ebenfalls bevorzugten Verfahrensvariante werden die drehbaren Pigmente im Schritt M) zumindest in einem Teil des Motivbereichs senkrecht zur Ebene der Farbschicht ausgerichtet und im Schritt H) in dieser Ausrichtung fixiert. Die senkrechte Ausrichtung gibt für den Betrachter den Blick auf den unter der Farbschicht liegenden Untergrund, beispielsweise eine farbige oder informationsführende Schicht frei.

Nach einer anderen ebenfalls vorteilhaften Verfahrensvariante wird in Schritt D) eine Druckfarbe bereitgestellt, bei der die Mikrokapseln als Kapselinhalt magnetische Nanopartikel oder Mikropartikel enthalten, die in einem externen Magnetfeld in der Trägerflüssigkeit der Mikrokapseln reversibel eine Überstruktur, insbesondere einen photonischen Kristall ausbilden. Im Schritt M) wird in dem den Motivbereich enthaltenden Teilbereich der Farbschicht ein externes magnetisches Feld angelegt, um dort eine Überstruktur, insbesondere einen photonischen Kristall aus den magnetischen Nano- oder Mikropartikeln zu bilden. Im Schritt H) wird die gebildete Überstruktur, insbesondere der gebildete photonische Kristall dauerhaft fixiert.

Die Mikrokapseln selbst weisen einen Durchmesser zwischen 1 µm und 200 µm, vorzugsweise zwischen 2 µm und 80 µm auf. Es versteht sich, dass der Durchmesser der Mikrokapseln mit Vorteil auf die Größe des Kapselinhalts abgestimmt ist. Die Wandstärke der Mikrokapseln liegt typischerweise zwischen 2 % und 30 %, vorzugsweise zwischen 5 % und 15 % des Durchmessers der Mikrokapseln.

In allen Gestaltungen wird mit Vorteil im Schritt A) zunächst eine Untergrundschicht auf ein Substrat, insbesondere ein Papier, einen Kunststoff oder einen Papier-Kunststoffverbund, aufgebracht, vorzugsweise in Form einer Information, insbesondere einem Muster, Zahlen und/oder Buchstaben, einem Portrait oder dergleichen. Die Druckfarbe wird dann zur Bildung der mikrokapselbasierten Farbschicht auf diese Untergrundschicht aufgebracht.

Mit besonderem Vorteil wird die Druckfarbe im Schritt A) im Sieb- oder Flexodruck aufgebracht. Vorzugsweise enthält die Druckfarbe einen hohen Anteil an Mikrokapseln. Bevorzug liegt der Anteil an Mikrokapseln in der Druckfarbe zwischen 10 Gew.-% bis 60 Gew.-%, insbesondere zwischen 15 Gew.-% und 35 Gew.-%.

Die Erfindung enthält auch ein optisch variables Sicherheitselement zur Absicherung von Wertgegenständen mit einer mikrokapselbasierten Farbschicht, die in einem Bindemittel eine Vielzahl von Mikrokapseln enthält, die jeweils eine semipermeable Kapselhülle aufweisen, die für vorbestimmte reaktive Substanzen durchlässig ist, und die eine in der Kapselhülle eingeschlossene Trägerflüssigkeit und einen durch externe elektrische oder magnetische Felder beeinflussbaren Kapselinhalt aufweisen, welcher in der Mikrokapsel im Wesentlichen frei beweglich ist. Durch die semipermeablen Kapselhüllen kann später in einem Motivbereich eine Schicht mit den vorbestimmten reaktiven Substanzen auf die mikrokapselbasierte Farbschicht aufgebracht und der Kapselinhalt dort fixiert werden.

Die Erfindung enthält auch ein optisch variables Sicherheitselement zur Absicherung von Wertgegenständen mit einer mikrokapselbasierten Farbschicht, die einen Motivbereich mit unterschiedlichem visuellem Eindruck enthält, wobei
- die mikrokapselbasierte Farbschicht außerhalb des Motivbereichs in einem Bindemittel eine Vielzahl von Mikrokapseln enthält, die jeweils eine semipermeable Kapselhülle aufweisen, die für vorbestimmte reaktive Substanzen durchlässig ist, und die eine in der Kapselhülle eingeschlossene Trägerflüssigkeit und einen durch externe elektrische oder magnetische Felder beeinflussbaren Kapselinhalt aufweisen, welcher in der Mikrokapsel im Wesentlichen frei beweglich ist, und
- die mikrokapselbasierte Farbschicht innerhalb des Motivbereichs in einem Bindemittel eine Vielzahl von Mikrokapseln enthält, deren Kapselinhalt fixiert ist.

In beiden Gestaltungen sind die Mikrokapseln mit semipermeablen Kapselhüllen und die Pigmente in den Mikrokapseln der Sicherheitselemente vorzugsweise wie oben angegeben ausgebildet. Insbesondere können die semipermeablen Kapselhüllen für hydrophobe Monomere durchlässig sein, vorzugsweise für hydrophobe Monomere mit einem Molekulargewicht unterhalb von 500 g/mol und/oder mit einer Oberflächenspannung von weniger als 38 dyn/cm.

Die mikrokapselbasierte Farbschicht ist mit Vorteil auf einer informationsführenden Untergrundschicht, insbesondere einer Siebdruck-, Flexodruck- oder Stichtiefdruckschicht aufgebracht. Alternativ oder zusätzlich kann die mikrokapselbasierte Farbschicht mit einer thermochromen oder magnetischen Untergrundschicht kombiniert sein.

In allen Varianten der vorliegenden Erfindung kann eine transluzente bzw. transparente Trägerflüssigkeit eingesetzt werden. Denkbar ist auch eine opake Trägerflüssigkeit. Die Wahrnehmung der in den Mikrokapseln eingeschlossenen Pigmente ist durch eine opake Trägerflüssigkeit in der Regel aber erheblich beeinträchtigt. Besonders bevorzugt sind derzeit daher Mikrokapseln mit einer transparenten Trägerflüssigkeit, da diese eine besonders gute Wahrnehmung der Pigmente durch den Betrachter ermöglicht. Der sehr hohe Wiedererkennungswert steigert daher bei solchen Ausführungsformen den Fälschungsschutz des Sicherheitselementes noch weiter.

Bei obiger Diskussion der Trägerflüssigkeit versteht es sich im Hinblick auf die Kapselhülle, dass diese transparent oder transluzent ausgebildet sein muss, um die Wahrnehmung der Trägerflüssigkeit bzw. der magnetisch ausrichtbaren Pigmente für den Betrachter zu ermöglichen.

Im Rahmen der vorliegenden Erfindung wird unter einem "transparenten" Material ein Material verstanden, das einfallende elektromagnetische Strahlung zumindest im sichtbaren Wellenlängenbereich von ca. 380 nm bis ca. 780 nm im Wesentlichen vollständig hindurchlässt. Bei einem "transparenten" Material im Rahmen der vorliegenden Erfindung, insbesondere einer "transparenten" Trägerflüssigkeit, ist der Transmissionsgrad T ≥ 0,8, wobei T als Quotient der durch das Material hindurch gelassenen Strahlungsleistung L und der auf das Substrat eingestrahlten Strahlungsleistung L₀ definiert ist. Diese exakte Definition des Transmissionsgrades (T = L/L₀) entspricht der im "Lexikon der Optik", Spektrum Akademischer Verlag, Heidelberg 2003, Band 2, Seite 366, Begriff "Transmissionsgrad" gegebenen Definition.

Ein "opakes" bzw. "undurchsichtiges" Material weist im Rahmen der vorliegenden Erfindung einen Transmissionsgrad T ≤ 0,1 auf, wobei T als Quotient L/L₀ definiert ist (siehe oben). Im Rahmen der vorliegenden Erfindung lässt ein opakes Material einfallende elektromagnetische Strahlung daher zumindest im sichtbaren Wellenlängenbereich von ca. 380 nm bis ca. 780 nm im Wesentlichen nicht durch.

Ein "transluzentes", "durchscheinendes" oder "semitransparentes" Material, insbesondere eine "transluzente" Trägerflüssigkeit, weist im Rahmen der vorliegenden Erfindung zumindest im sichtbaren Wellenlängenbereich von ca. 380 nm bis ca. 780 nm einen Transmissionsgrad T größer 0,1 und kleiner 0,8 auf, d.h. 0,1 < T < 0,8.

Es ist hier noch anzumerken, dass die subjektive Wahrnehmung eines transparenten, transluzenten oder opaken Materials durch einen Betrachter zum Teil erheblich von der oben gegebenen exakten Definition für transparentes, transluzentes oder opakes Material abweichen kann. Bei Messreihen, die zur Festlegung der oben aufgeführten Transmissionsgrade für transparente, transluzente und opake Materialien geführt haben, wurde nämlich festgestellt, dass die subjektive Wahrnehmung eines transparenten, transluzenten oder opaken Materials sehr stark von der Beleuchtungssituation abhängt, also davon, ob das Material vom Betrachter in Reflexion, Transmission oder in einer Kombination aus Reflexion und Transmission betrachtet wird. So nimmt ein Betrachter unter Umständen z.B. ein Sicherheitselement auch dann noch als transparent wahr, wenn der Transmissionsgrad des Sicherheitselements mehr als z. B. 0,7 beträgt, d.h. weniger als 30 % des einfallenden Lichts reflektiert oder absorbiert werden. Gleiches gilt für eine Trägerflüssigkeit mit einem Transmissionsgrad von 0,7. Eine solche für den Betrachter transparent erscheinende Trägerflüssigkeit ist dann gegebenenfalls ein transluzentes Material im Sinne der oben gegebenen Definition (0,1 < T < 0,8).

Einen ähnlich großen Einfluss auf die subjektive Wahrnehmung eines Betrachters hat darüber hinaus die Lichtstreuung des betrachteten Materials, weil die Streuung unter anderem den Kontrast zwischen hellen und dunklen Bereichen des betrachteten Materials beeinflusst.

Unabhängig von dem möglichen Unterschied zwischen subjektiver Wahrnehmung eines Betrachters und obigen Definitionen transparenter, transluzenter oder opaker Materialien, sind alle im Rahmen dieser Anmeldung beschriebenen erfindungsgemäßen Varianten ausführbar, d. h. für den Fachmann problemlos nacharbeitbar.

Bezüglich der in den Mikrokapseln enthaltenen Trägerflüssigkeit sei an dieser Stelle angemerkt, dass in allen Varianten der Erfindung in dieser Trägerflüssigkeit zusätzliche Sicherheitsmerkmale enthalten sein können, die der Mikrokapsel und dem damit hergestellten Sicherheitselement eine zusätzliche Funktionalität, insbesondere einen weiter erhöhten Fälschungsschutz verleihen. Beispielsweise kann die Trägerflüssigkeit ein besonderes Farbmittel oder ein lumineszierendes, insbesondere fluoreszierendes Material aufweisen. Denkbar ist ferner ein Material, das mittels elektromagnetischer Strahlung, insbesondere Laserstrahlung, in einer physikalischen Größe, insbesondere in seiner Farbe, beeinflusst werden kann. Z.B. könnte bei einem solchen Material die Beaufschlagung mit elektromagnetischer Strahlung, insbesondere Laserstrahlung, zu einer Farbveränderung der in der Trägerflüssigkeit befindlichen Substanzen führen, so dass der Betrachter die Bereiche des Sicherheitselements, die mit elektromagnetischer Strahlung beaufschlagte Mikrokapseln enthalten, von den Bereichen ohne Beaufschlagung mit elektromagnetischer Strahlung unterscheiden kann, d.h. der Betrachter die mit Strahlung beaufschlagten bzw. nicht beaufschlagten Bereiche in einer unterschiedlichen Farbe wahrnimmt.

Es versteht sich, dass die zusätzlich in der Trägerflüssigkeit vorgesehenen Substanzen alternativ oder zusätzlich in der Kapselhülle der Mikrokapseln vorgesehen sein können. D.h. die Kapselhülle kann z.B. ein Farbmittel, ein lumineszierendes, insbesondere fluoreszierendes Material oder ein durch elektromagnetische Strahlung, insbesondere Laserstrahlung markierbares Material aufweisen. Auch durch die Vorsehung der vorstehend genannten Substanzen in der Kapselhülle kann eine weitere Funktionalität für die Mikrokapsel vorgesehen werden. Die zusätzliche Funktionalität der Kapselhülle bzw. der Trägerflüssigkeit (siehe oben) trägt in synergistischer Weise zur Erhöhung des Fälschungsschutzes der in der vorliegenden Anmeldung beschriebenen Erfindung bei.

Die Erfindung enthält ferner eine Sicherheitsanordnung zur Absicherung von Sicherheitspapieren, Wertdokumenten und dergleichen, mit einem Sicherheitselement der oben beschriebenen Art und mit einem Verifikationselement mit einem Magnetbereich. In dem Magnetbereich liegt vorteilhaft magnetisches Material in Form von Mustern, Linien, Zeichen oder einer Codierung vor. Das von dem magnetischen Material dargestellte Motiv kann offen sichtbar sein oder auch ohne Hilfsmittel verborgen sein, beispielsweise durch Überdeckung mit einer dunklen Druckschicht. Vorzugsweise ist der Magnetbereich im Wesentlichen senkrecht zur Ebene des Verifikationselements magnetisiert.

Die Erfindung umfasst weiter einen Datenträger, insbesondere ein Wertdokument, wie eine Banknote, einen Pass, eine Urkunde, eine Ausweiskarte oder dergleichen, der mit einem Sicherheitselement der beschriebenen Art oder mit einer Sicherheitsanordnung der beschriebenen Art ausgestattet ist. Enthält der Datenträger sowohl ein erfindungsgemäßes Sicherheitselement als auch ein zugehöriges Verifikationselement, so sind diese mit Vorteil geometrisch so auf dem Datenträger angeordnet, dass das Sicherheitselement durch Biegen oder Falten des Datenträgers über das Verifikationselement bringbar ist.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäßen optisch variablen Sicherheitselement,
- Fig. 2: das Sicherheitselement der Fig. 1 zusammen mit einer Verifikationseinrichtung, wobei in (a) Sicherheitselement und Verifikationseinrichtung räumlich getrennt sind, und in (b) das Sicherheitselement auf der Verifikationseinrichtung aufliegt,
- Fig. 3: einen Querschnitt durch ein Sicherheitselement nach einem Ausführungsbeispiel der Erfindung, in der linken Bildhälfte ohne und in der rechten Bildhälfte mit Verifikationseinrichtung,
- Fig. 4: eine Skizze zur Erläuterung des Prinzip der Fixierung der Pigmente in einer gewünschten Ausrichtung, wobei (a) bis (d) vier Zwischenschritte des Verfahrens zeigen,
- Fig. 5: schematisch die Möglichkeiten der Ausrichtung und Fixierung nicht-sphärischer Pigmente, wobei (a) den Zustand vor dem Eindiffundieren und Härten der reaktiven Substanzen und (b) den Zustand nach dem Härten zeigt,
- Fig. 6: Mikrokapseln, deren Kapselinhalt photonische Kristalle ausbildet, wobei (a) einen ungeordneten Zustand ohne Magnetfeld zeigt und (b) und (c) jeweils einen geordneten Zustand bei verschiedenen Magnetfeldstärken zeigen,
- Fig. 7: in (a) eine Identifikationskarte mit einem erfindungsgemäßen Sicherheitselement, in (b) eine Kartenaufnahme mit einer Verifikationseinrichtung für die Identifikationskarte von (a) und in (c) die Kartenaufnahme mit eingelegter Identifikationskarte.

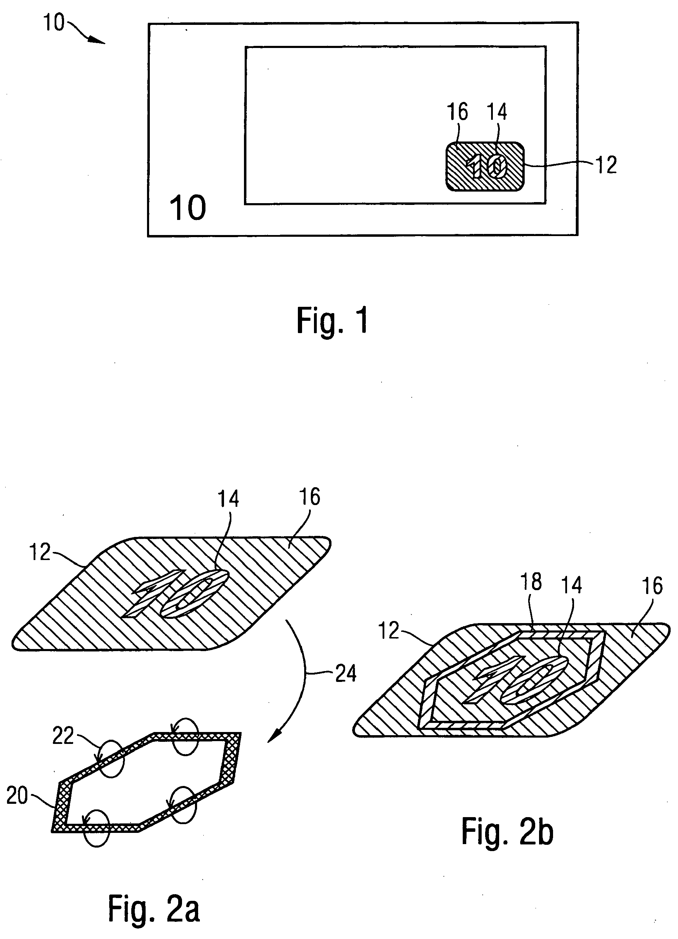

Die Erfindung wird nun am Beispiel von Sicherheitselementen für Banknoten und andere Wertdokumente erläutert. Fig. 1 zeigt dazu eine schematische Darstellung einer Banknote 10 mit einem optisch variablen Sicherheitselement 12. Das Sicherheitselement 12 enthält einen stets sichtbaren Motivbereich 14, der die Form der Denomination "10" der Banknote bildet, und der sich durch eine besonders hohe optische Brillanz von dem Umgebungsbereich 16 abhebt.

Neben dem stets sichtbaren Motivbereich 14 enthält das Sicherheitselement 12 ein durch eine externe Verifikationseinrichtung 20 interaktiv auslösbares, reversibles Echtheitskennzeichen 18. Zur Erläuterung der Funktionsweise diese interaktiven Echtheitskennzeichens 18 zeigt Fig. 2(a) das Sicherheitselement 12 in großem Abstand von einer externen Verifikationseinrichtung 20, die im Ausführungsbeispiel durch einen starken Permanentmagneten in Form eines Hexagonrings gebildet ist. Die Oberseite des Hexagon-Magneten 20 bildet dabei einen magnetischen Nordpol und die Unterseite einen magnetischen Südpol, so dass die Magnetfeldlinien 22 des Hexagon-Magneten 20 im Wesentlichen senkrecht auf der Ebene des Magneten stehen.

Wird das Sicherheitselement 12 auf den Magneten 20 aufgelegt, wie durch das Bezugszeichen 24 in Fig. 2(a) angedeutet, so verändert sich das visuelle Erscheinungsbild des Sicherheitselements 12 in dem unmittelbar über dem Magneten 20 liegenden Teilbereich 18 des Umgebungsbereichs 16. Der visuelle Eindruck des Umgebungsbereichs 16 tritt im Teilbereich 18 in den Hintergrund und eine farbige oder informationsführende Untergrundschicht wird sichtbar, wie in Fig. 2(b) schematisch dargestellt. Im Motivbereich 14 tritt keine Änderung auf, auch wenn der Magnet 20 teilweise oder vollständig unter dem Motivbereich 14 liegt. Die Änderung im Teilbereich 18 ist dabei vollständig reversibel. Wird das Sicherheitselement 12 nämlich wieder von der Verifikationseinrichtung 20 entfernt, so stellt sich im Bereich 18 nach kurzer Zeit der Ausgangszustand der Fig. 2(a) wieder ein.

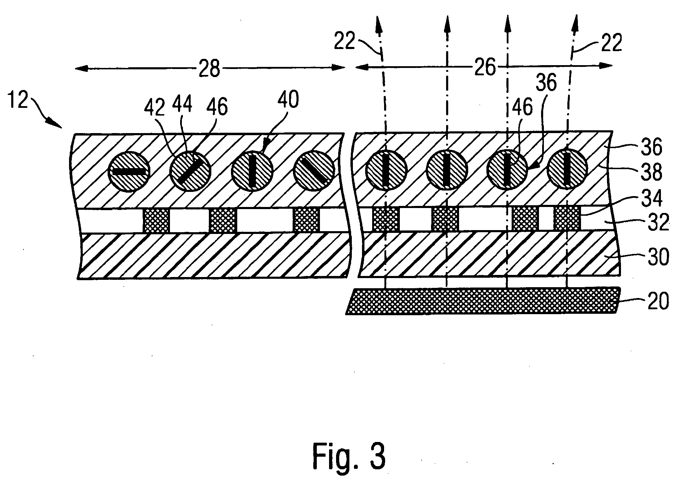

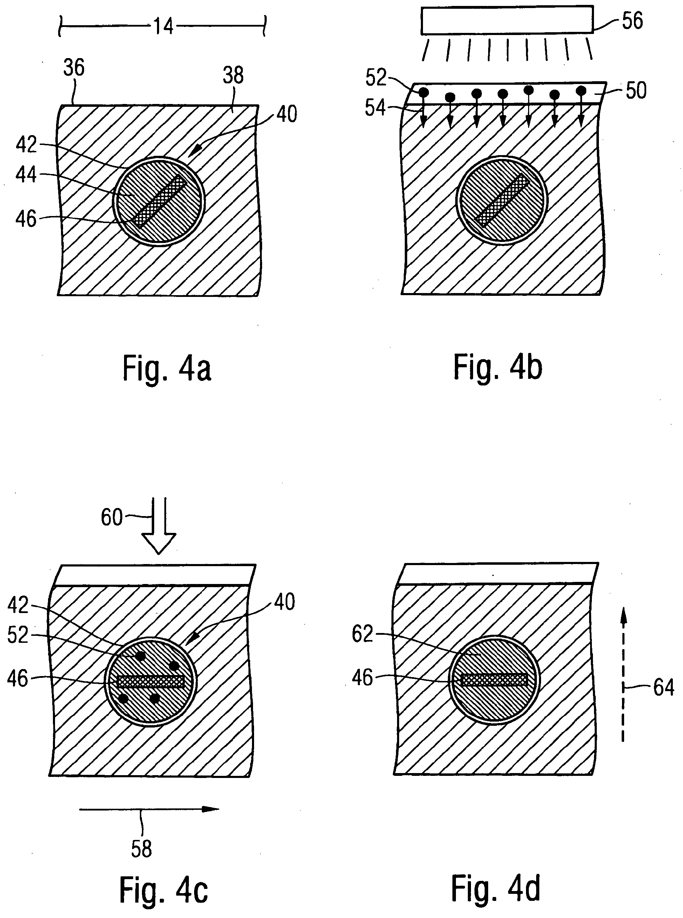

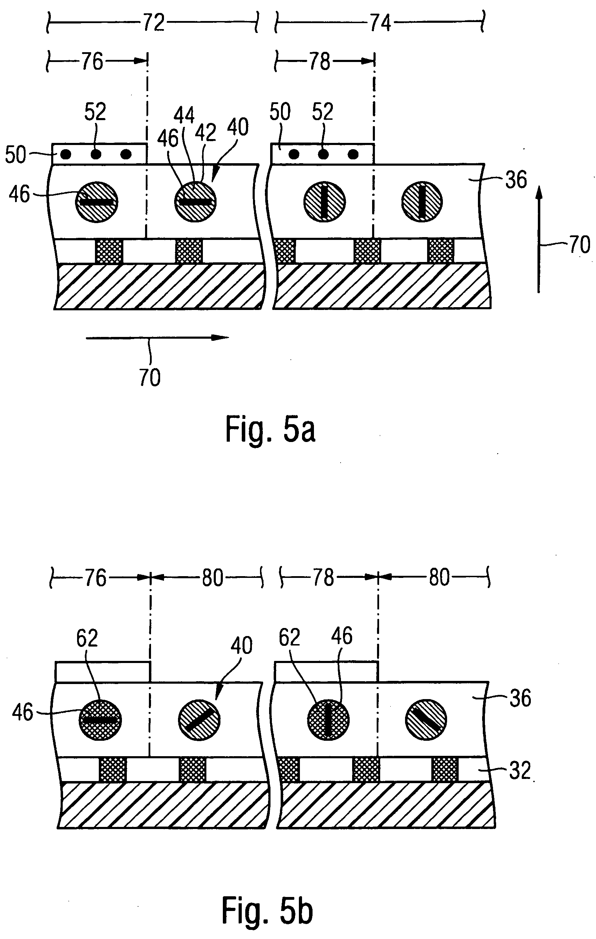

Der Aufbau eines erfindungsgemäßen Sicherheitselements 12 und das Zustandekommen der reversiblen Änderung des visuellen Erscheinungsbilds werden nun mit Bezug auf die Querschnittsdarstellung der Fig. 3 genauer erläutert. Dabei wird der Einfachheit halber der stets sichtbare Motivbereich 14 zunächst ausgeklammert und nur der Umgebungsbereich 16 dargestellt. Die sich im Motivbereich 14 ergebenden Unterschiede sind weiter unten mit Bezug auf die Figuren 4 und 5 erläutert.

Zunächst zeigt die linke Bildhälfte von Fig. 3 das Sicherheitselement 12 ohne Verifikationseinrichtung 20 bzw. einen Bereich 28 abseits des Magneten 20, während die rechte Bildhälfte einen Bereich 26 des Sicherheitselements zeigt, der sich unmittelbar über dem Magneten 20 befindet.

Auf das Banknotenpapier 30 der Banknote 10 ist im Bereich des Sicherheitselements 12 eine Druckschicht 32 aufgebracht, die eine beliebige Information, wie etwa ein Muster 34, Zahlen und/oder Buchstaben, ein Portrait oder dergleichen darstellt. Die Druckschicht 32 kann aus einer oder mehreren Farben bestehen und wird typischerweise im Offset-, Letterset-, Flexo- oder Stichtiefdruck aufgebracht.

Über diese Druckschicht 32 ist zumindest in Teilen eine mikrokapselbasierte Farbschicht 36 aufgebracht, die in einem Bindemittel 38 eine Vielzahl von Mikrokapseln 40 enthält. Die Mikrokapseln weisen jeweils eine semipermeable Kapselhülle 42 auf, die für vorbestimmte reaktive Substanzen durchlässig ist. Beispielsweise sind die Kapselhüllen 42 des gezeigten Ausführungsbeispiels für strahlenhärtbare Acrylate mit geringem Molekulargewicht und geringer Oberflächenspannung durchlässig, wie etwa Isobornylacrylat. Für den Fall des vorstehend genannten Isobornylacrylats beträgt die Oberflächenspannung 31,7 mN/m und liegt damit im Bereich der für diese Zwecke einsetzbaren Monomere mit einer Oberflächenspannung von ca. 28 mN/m bis 40 mN/m. Generell haben Substanzen mit geringer Oberflächenspannung für die vorliegende Erfindung den Vorteil, dass diese in der Regel zu einer guten Benetzung der Mikrokapseln führen und damit ein effizientes Eindringen in die Mikrokapseln ermöglichen.

Das Molekulargewicht von Isobornylacrylat beträgt 208 g/mol und liegt damit im bevorzugten Bereich der für die vorliegende Erfindung einsetzbaren Monomere, welche ein Molekulargewicht von ca. 180 g/mol bis etwa 1000 g/mol aufweisen. Es versteht sich, dass Substanzen mit relativ geringem Molekulargewicht effizient in die Mikrokapseln eindringen können und deshalb besonders vorteilhaft für die vorliegende Erfindung sind.

Diese selektive Durchlässigkeit der Kapselhüllen 42 wird zur Erzeugung des Motivbereichs ausgenutzt, wie weiter unten mit Bezug auf Fig. 4 im Detail erläutert.

Die Mikrokapseln 40 weisen weiter eine in der Kapselhülle eingeschlossene Trägerflüssigkeit 44 und als beeinflussbaren Kapselinhalt magnetisch ausrichtbare, nicht-sphärische, insbesondere plättchenförmige Pigmente 46 auf. Die Pigmente 46 sind dabei in der Trägerflüssigkeit 44 der Mikrokapseln 40 im Wesentlichen frei drehbar und durch ein externes Magnetfeld, wie etwa das Feld 22 des Hexagon-Magneten 20, reversibel ausrichtbar.

Im Ausführungsbeispiel sind die Pigmente 46 aus reduzierend behandeltem Carbonyleisenpulver hergestellte plättchenförmige Eisenpigmente mit einem hohen Verhältnis von Plättchendurchmesser zu Plättchendicke von 20:1 oder mehr. Der (größte) Plättchendurchmesser liegt dabei vorzugsweise zwischen 2 µm und 150 µm, insbesondere zwischen 5 µm und 50 µm, und die Plättchendicke liegt vorzugsweise zwischen 40 nm und 1,5 µm, insbesondere zwischen 200 nm und 1,3 µm. Die Pigmente 46 können auch mehrschichtig ausgebildet sein und insbesondere eine magnetische Schicht und eine nichtmagnetische Schicht, insbesondere eine Interferenzschicht, aufweisen. Ein mehrschichtiges Pigment kann beispielsweise durch ein Eisenpigment mit einer Siliziumdioxidschicht gebildet sein. Solche mehrschichtigen Pigmente können mit besonderem Vorteil magnetische Ausrichtbarkeit mit einem Farbwechsel bei Änderung des Betrachtungswinkels verbinden.

Die mikrokapselbasierte Farbschicht 36 wird bevorzugt im Sieb- oder Flexodruck aufgebracht, es kommt aber auch ein Auftrag über Düsen oder mit anderen dem Fachmann bekannten Druck- und Beschichtungsverfahren infrage.

Da die Pigmente 46 im Inneren der Kapselhülle 42 im Wesentlichen frei drehbar sind, weisen sie ohne externes Magnetfeld keine Vorzugsorientierung auf, sondern sind vielmehr im Wesentlichen zufällig und damit insgesamt isotrop ausgerichtet. Die gleichmäßige Verteilung der Ausrichtung der Pigmente 46 in alle Richtungen ist in der linken Bildhälfte der Fig. 3 schematisch dargestellt.

Im Bereich 26 unmittelbar über dem Magneten 20 sind die magnetisch ausrichtbaren Pigmente 46 aufgrund ihrer freien Drehbarkeit in der Kapselhülle 42 magnetisch ausgerichtet. Die plättchenförmigen Pigmente 46 orientieren sich dabei mit ihrer Plättchenausdehnung entlang der Magnetfeldlinien 22. Treten die Magnetfeldlinien 22 im Bereich 26 im Wesentlichen senkrecht durch die mikrokapselbasierte Farbschicht 36 hindurch, so richten sich die Pigmente 46 im Wesentlichen senkrecht zur Ebene der Farbschicht 36 aus, wie in der rechte Bildhälfte der Fig. 3 gezeigt.

Wegen ihrer plättchenförmigen Gestalt wirken die Pigmente 46 für den Betrachter wie die Lamellen einer Jalousie, die den Blick auf die darunterliegende Druckschicht 32, 34 freigeben oder ganz oder teilweise blockieren. In den Bereichen 28, in denen die Pigmente 46 im Wesentlichen isotrop in ihren Kapselhüllen 42 angeordnet sind (linke Bildhälfte der Fig. 3), schränken sie die Sicht auf die Druckschicht 32 stark ein, dass die mikrokapselbasierte Farbschicht 36 in diesem Bereich weitgehend opak erscheint.

Im Bereich 26, in dem die Pigmente 46 durch den Magneten 20 im Wesentlichen senkrecht zur Ebene der Farbschicht 34 ausgerichtet sind, geben diese dagegen wie die parallel gestellten Lamellen einer Jalousie den Blick auf die darunterliegende Druckschicht 30 und das Linienmuster 32 frei. Wegen des großen Verhältnisses von Plättchendurchmesser zu Plättchendicke ergibt sich ein hoher Kontrast zwischen deckenden Teilbereichen 28 und transluzenten Teilbereichen 26. Darüber hinaus erscheint das durch die Plättchenausrichtung in den Teilbereichen 26, 28 erzeugte Motiv für das menschliche Auge mit einem effektvollen, dreidimensional anmutenden Erscheinungsbild.

Wird das Sicherheitselement 12 wieder von dem Magneten 20 entfernt, so relaxieren die magnetisch ausgerichteten Pigmente 46 aufgrund ihrer Beweglichkeit innerhalb der Kapselhülle 42 nach einiger Zeit wieder in den im Wesentlichen isotropen Ausgangszustand der linken Bildhälfte der Fig. 3. Die Änderung des visuellen Erscheinungsbilds des Sicherheitselements 14 wird also interaktiv ausgelöst und ist vollständig reversibel. Die Geschwindigkeit, mit der die Pigmente 46 in ihren Ausgangszustand zurückkehren, kann beispielsweise durch die Viskosität der Trägerflüssigkeit 44 in weitem Rahmen nach Wunsch eingestellt werden.

Anstatt die Pigmente 46 durch den Magneten 20 senkrecht zur Ebene der Farbschicht 36 auszurichten, können sie selbstverständlich durch ein in der Ebene der Farbschicht 36 liegendes Magnetfeld auch parallel zur Ebene der Farbschicht 36 ausgerichtet werden. In parallelem Zustand erzeugen die Pigmente 46 einen optisch ansprechenden visuellen Eindruck hoher Brillanz, der von einem kooperativen Effekt einer Vielzahl nahezu exakt parallel zueinander ausgerichteter Pigmente 46 herrührt.

Erfindungsgemäß werden in der mikrokapselbasierten Farbschicht 36 neben den reversibel veränderbaren Bereichen auch ein oder mehrere Motivbereiche 14 mit festgelegter Orientierung des Pigmente 46 geschaffen. Sind die Pigmente 46 in einem Motivbereich 14 beispielsweise alle parallel zur Ebene der Farbschicht 36 ausgerichtet und in dieser Ausrichtung fixiert, so bildet der Motivbereich 14 einen Teilbereich besonders hoher Brillanz, der an der oben beschriebenen reversiblen Änderung des visuellen Erscheinungsbilds des Sicherheitselements 12 nicht teilnimmt.

In anderen Gestaltungen können die Pigmente 46 eines Motivbereichs beispielsweise alle senkrecht zur Ebene der Farbschicht 36 ausgerichtet und in dieser Ausrichtung fixiert sein, so dass ein solcher Motivbereich stets den Blick auf die Farbe oder Information der Druckschicht 30, 32 freigibt, ohne an der oben beschriebenen reversiblen Änderung des visuellen Erscheinungsbilds des Sicherheitselements 12 teilzunehmen.

Das Prinzip der Fixierung der Pigmente 46 in einer gewünschten Ausrichtung wird nun mit Bezug auf Fig. 4 erläutert, wobei der Einfachheit halber jeweils nur eine einzige Mikrokapsel 40 in dem Bindemittel 38 dargestellt ist. Ausgehend vom Anfangszustand der Fig. 4(a) wird im gewünschten Motivbereich 14 auf die mikrokapselbasierte Farbschicht 36 eine Schicht mit den vorbestimmten strahlenhärtbaren Acrylaten 52, im Ausführungsbeispiel etwa dem oben genannte Isobornylacrylat, aufgebracht.

Nach dem Auftrag der Schicht 50 beginnen die strahlenhärtbaren Acrylate 52 in die Farbschicht 36 einzudiffundieren, wie durch die Pfeile 54 in Fig. 4(b) angezeigt. Nach einer bestimmten Wartezeit sind die strahlenhärtbaren Acrylate 52 durch die für sie durchlässige Kapselhülle 42 in das Innere der Mikrokapseln 40 eingedrungen, wie in Fig. 4(c) dargestellt. Die notwendige Wartezeit hängt dabei stark von der Art der Kapselhülle 42, der Art der verwendeten reaktiven Substanzen 52, der Art des Bindemittels 38, der Viskosität und der Temperatur ab. Die erforderliche Wartezeit kann durch Temperaturbeaufschlagung 56 (Fig. 4(b)) verkürzt werden, da dadurch die Viskosität des Bindemittels 38 verringert und die Diffusionsgeschwindigkeit der reaktiven Substanzen 52 erhöht werden kann. Eine solche Temperaturbeaufschlagung kann beispielsweise durch Beaufschlagung mit Infrarotstrahlung und/ oder Heißluft erfolgen.

Nun werden die in der Trägerflüssigkeit 44 frei drehbaren Pigmente 46 durch ein geeignetes externes Magnetfeld 58 ausgerichtet, beispielsweise parallel zur Ebene der Farbschicht 36, wie in Fig. 4(c) gezeigt. Es versteht sich, dass durch das externe Magnetfeld 58 anstelle einer Orientierung parallel zur Ebene der Farbschicht auch eine andere Ausrichtung, etwa senkrecht zur Ebene der Farbschicht, vorgegeben werden kann.

Die Ausrichtung kann auch räumlich variieren und ein Muster oder ein Motiv bilden. Beispielsweise kann durch das sphärische Feld eines unterhalb der Farbschicht 36 angeordneten Kugelmagneten ein kreisförmiges Ausrichtungsmuster erzeugt werden, bei dem die Pigmente 46 im Kreismittelpunkt senkrecht zur Farbschichtebene stehen und an den Kreisrändern im Wesentlichen parallel zur Farbschichtebene ausgerichtet sind.

Je nach der konkreten Verfahrensführung kann das Magnetfeld 58 bereits während der Wartezeit oder erst am Ende der Wartezeit angelegt werden. Am Ende der Wartezeit sind die strahlenhärtbaren Acrylate 52 in die Mikrokapseln 40 eingedrungen und die Pigmente 46 nach Wunsch ausgerichtet, wie in Fig. 4(c) dargestellt. Die Farbschicht 36 wird dann mit UV-Strahlung 60 beaufschlagt, so dass die strahlenhärtbaren Acrylate 52 im Inneren der Mikrokapseln 40 ausgehärtet und die Pigmente 46 dadurch in ihrer eingestellten Ausrichtung fixiert werden.

Wie in Fig. 4(d) illustriert, sind die Pigmente 46 nach dem Aushärtungsschritt dauerhaft in dem gehärteten Kapselinneren 62 der Mikrokapseln 40 fixiert, so dass die Pigmente 46 im Motivbereich 14 nach dem Entfernen des Magnetfelds 58 nicht relaxieren und auch durch Anlegen eines anderen externen Magnetfelds 64 nicht in ihrer Ausrichtung verändert werden. Der Motivbereich 14 nimmt daher an dem oben beschriebenen reversiblen Wechsel des Erscheinungsbilds beim Anlegen eines externen Magnetfelds nicht mehr teil.

Fig. 5 fasst die Möglichkeiten der Ausrichtung und Fixierung nicht-sphärischer Pigmente 46 schematisch zusammen. Dabei symbolisiert in der Darstellung der Fig. 5(a) jeweils eine Mikrokapsel 40 einen ganzen Teilbereich der Farbschicht 36 mit einer Vielzahl an Mikrokapseln.

In den Motivbereichen 76, 78 ist auf die Farbschicht 36 eine Schicht 50 mit vorbestimmten strahlenhärtbaren Acrylaten 52 aufgebracht, die nach einer gewissen Wartezeit in das Innere der Mikrokapseln 40 eingedrungen sind, wie oben erläutert. Die Pigmente 46 der Mikrokapseln werden durch ein externes Magnetfeld 70 nach Wunsch ausgerichtet, beispielsweise in einem Teilbereich 72 parallel zur Ebene der Farbschicht 36 (linke Bildhälfte in Fig. 5(a)) und in einem Teilbereich 74 senkrecht zur Ebene der Farbschicht 36 (rechte Bildhälfte in Fig. 5(a)). Durch Beaufschlagung mit UV-Strahlung werden die strahlenhärtbaren Acrylate 52 im Inneren der Mikrokapseln 40 ausgehärtet und die Pigmente 46 dadurch in ihrer eingestellten Ausrichtung fixiert.

Fig. 5(b) zeigt die Situation nach dem Eindiffundieren und Aushärten der strahlenhärtbaren Acrylate. In den nicht bedruckten Umgebungsbereichen 80 konnten die Pigmente 46 durch die UV-Strahlung nicht fixiert werden, dort behalten die Pigmente 46 ihre freie Drehbarkeit bei. Sie relaxieren nach dem Entfernen des äußeren Magnetfelds 70 in eine zufällige Orientierung und können auch später jederzeit durch ein externes Magnetfeld ausgerichtet werden.

Im ersten Motivbereich 76 sind die Pigmente 46 im Kapselinneren 62 in einer Ausrichtung parallel zur Ebene der Farbschicht 36 fixiert und zeigen dort unabhängig von einem später angelegten externen Magnetfeld stets einen ausgeprägten optischen Effekt hoher Brillanz. Im zweiten Motivbereich 78 sind die Pigmente 46 im Kapselinneren 62 in einer Ausrichtung im Wesentlichen senkrecht zur Ebene der Farbschicht 36 fixiert und geben dort unabhängig von einem später angelegten externen Magnetfeld stets den Blick auf die Druckschicht 32 frei. In den Umgebungsbereichen 80, in denen die Pigmente 46 nicht fixiert wurden, können diese auch nach der Aushärtung durch ein externes Magnetfeld reversibel ausgerichtet werden, wie in Zusammenhang mit Fig. 3 bereits beschrieben.

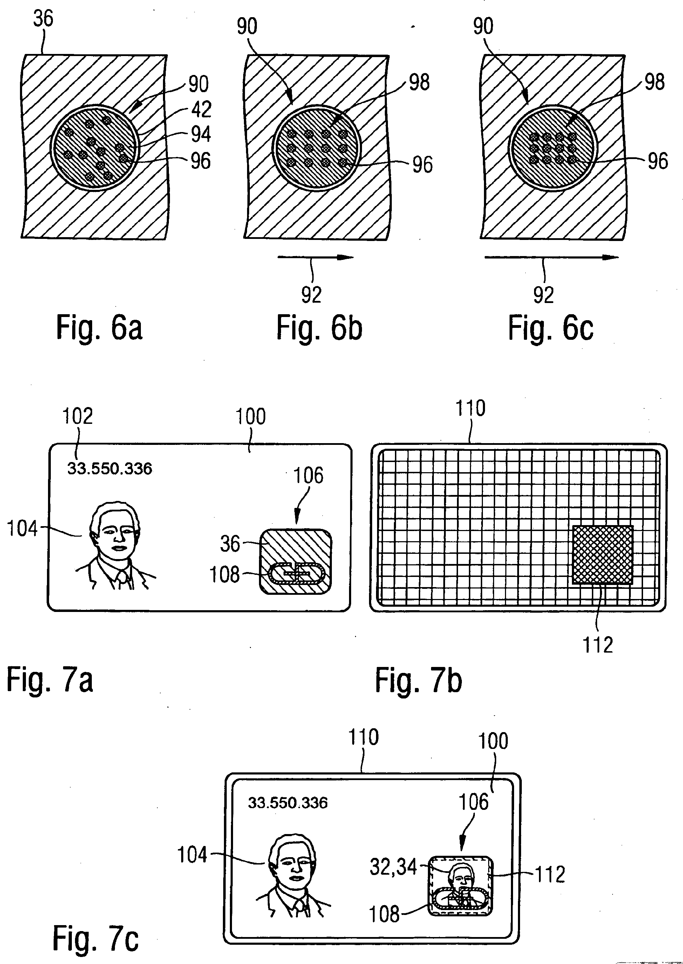

Auch wenn die bisherigen Ausführungsbeispiele jeweils anhand von Ausgestaltungen mit plättchenförmigen Pigmenten beschrieben wurden, ist die Erfindung nicht auf solche Ausgestaltungen beschränkt. Zur Illustration zeigt Fig. 6 eine Farbschicht 36 mit Mikrokapseln 90, die als Kapselinhalt magnetische Nanopartikel 96 enthalten, die in einem externen Magnetfeld 92 in der Trägerflüssigkeit 94 der Mikrokapseln reversibel einen photonischen Kristall ausbilden.

Mit Bezug zunächst auf Fig. 6(a) enthält jede der Mikrokapseln 90 eine kolloidale Suspension aus einer inerten Trägerflüssigkeit 94 mit fein verteilten, monodispersen, superparamagnetischen Eisenoxid-Nanopartikeln 96, wobei der Mittelwert dₘ der Durchmesser der monodispersen Nanopartikel 96 zwischen 2 nm und 300 nm, beispielsweise bei dₘ = 150 nm liegt. Ohne externes Magnetfeld sind die in der Trägerflüssigkeit 94 frei beweglichen Nanopartikel 96 weitgehend zufällig angeordnet, wie in Fig. 6(a) dargestellt. Einfallendes sichtbares Licht wird von den Eisenoxid-Nanopartikeln 96 dann vorwiegend absorbiert, so dass die Mikrokapseln 90 und damit die Farbschicht 36 für einen Betrachter insgesamt einen dunklen, grau-schwarzen Farbeindruck erzeugen.

Wird ein externes Magnetfeld an die Mikrokapseln 90 angelegt, wie in den Figuren 6(b) und (c) dargestellt, so ordnen sich die superparamagnetischen Nanopartikel 96 regelmäßig an und bilden einen photonischen Kristall 98 mit Gitterkonstanten der Größenordnung von 100 nm bis zu einigen 100 nm aus. Aufgrund der außerordentlich regelmäßigen Anordnung der Nanopartikel 96 in Form eines photonischen Kristalls wird von dem einfallenden Licht jeweils eine bestimmte Wellenlänge reflektiert, die sich aus dem Brechungsindex der Trägerflüssigkeit 94, der Gitterkonstante des ausgebildeten photonischen Kristalls 98 und dem Einfallswinkel des einfallenden Lichts ergibt. Ein stärkeres Magnetfeld erzeugt dabei einen photonischen Kristall mit einer kleineren Gitterkonstante, wie in Fig. 6(c) dargestellt, so dass eine Erhöhung des Magnetfelds 92 zu einer Blauverschiebung des reflektierten Lichts führt. Beispielsweise kann der in Fig. 6(b) dargestellte photonische Kristall 98 eine selektive Reflexion im roten Spektralbereich und der in Fig. 6(c) gezeigte photonische Kristall 98 eine selektive Reflexion im blauen Spektralbereich zeigen.

Da die semipermeablen Kapselhüllen 42 der Mikrokapseln 90 für vorbestimmte reaktive Substanzen durchlässig sind, können die im Magnetfeld ausgebildeten photonischen Kristalle 98 der Figuren 6(b) und (c) in der oben beschriebenen Weise dauerhaft in den Mikrokapseln 90 fixiert werden. In den so gebildeten Motivbereichen bleibt die selektive Reflexion, beispielsweise im roten oder blauen Spektralbereich, dann auch nach dem Entfernen des externen Magnetfelds erhalten.

In anderen Gestaltungen kann der Kapselinhalt beispielsweise auch elektrophoretisch oder magnetophoretisch aktive Partikel enthalten. Dabei wird der Kapselinhalt durch ein elektrisches oder magnetisches Feld beeinflusst, insbesondere die relative Position des Inhalts innerhalb der Kapsel verändert. Die veränderte Position wird dann in der oben beschriebenen Weise durch Eindiffundieren reaktiver Substanzen und nachfolgende Härtung dauerhaft fixiert.

Die Erfindung kann auch bei Karten vorteilhaft eingesetzt werden, wie anhand des Ausführungsbeispiels der Fig. 7 illustriert. Fig. 7(a) zeigt eine Aufsicht auf eine Identifikationskarte 100, wie etwa eine Ausweiskarte, Bankkarte, Kreditkarte oder einen Führerschein. Die Identifikationskarte 100 enthält typischerweise eine oder mehrere offene Kennzeichnungen, wie etwa eine Seriennummer 102 oder ein Portrait 104 des Karteninhabers.

Zusätzlich enthält die Identifikationskarte 100 ein erfindungsgemäßes Sicherheitselement 106, das im Ausführungsbeispiel durch eine Druckschicht 32 mit einer zweiten verkleinerten Portraitdarstellung 34 des Karteninhabers und eine auf die Druckschicht 32 aufgebrachte mikrokapselbasierte Farbschicht 36 der oben beschriebenen Art gebildet ist. Wegen der im Wesentlichen isotropen Ausrichtung der verkapselten Pigmente 46 ist die mikrokapselbasierte Farbschicht 36 normalerweise opak, so dass die zweite Portraitdarstellung 34 für einen Betrachter verborgen ist.

In einem Motivbereich 108, der im Ausführungsbeispiel in Form eines Logos gestaltet ist, sind die Pigmente 46 in einer Ausrichtung parallel zum Kartenkörper fixiert, so dass sich dieser Motivbereich 108 durch seine besonders hohe Brillanz von dem Hintergrundbereich abhebt, wie in Fig. 7(a) gezeigt.

Zur Authentifizierung wird die Identifikationskarte 100 in eine zugehörige Kartenaufnahme 110 gelegt, die, wie in Fig. 7(b) gezeigt, als Verifikationseinrichtung einen auf die Lage, Größe und Form des Sicherheitselements 106 abgestimmten Permanentmagneten 112 enthält. Bei einer echten Identifikationskarte 100 werden die nicht fixierten und somit noch magnetisch ausrichtbaren Pigmente 46 durch die Magnetisierung des Magneten 112 senkrecht zur Ebene des Sicherheitselements 106 ausgerichtet und geben dadurch den Blick auf die zweite Portraitdarstellung 34 frei, wie in Fig. 7(c) dargestellt.

Im Motivbereich 108 sind die Pigmente 46 in ihrer Ausrichtung fixiert, so dass dieser Bereich am reversiblen Wechsel des Erscheinungsbilds nicht teilnimmt. Das Erscheinen der zweiten Portraitdarstellung 34 in Überlagerung mit dem Logo 108 und die Übereinstimmung mit dem ersten Portrait 104 kann somit zur Echtheitsprüfung der Karte 100 und als Berechtigungsnachweis des Karteninhabers eingesetzt werden.

### Bezugszeichenliste

- 10: Banknote
- 12: Sicherheitselement
- 14: Motivbereich
- 16: Umgebungsbereich
- 18: reversibles Echtheitskennzeichen
- 20: Verifikationseinrichtung
- 22: Magnetfeldlinien
- 24: Auflegen
- 26, 28: Bereiche
- 30: Banknotenpapier
- 32: Druckschicht
- 34: Muster
- 36: mikrokapselbasierte Farbschicht
- 38: Bindemittel
- 40: Mikrokapseln
- 42: semipermeable Kapselhülle
- 44: Trägerflüssigkeit
- 46: Pigment
- 50: externes Magnetfeld
- 52: reaktive Substanzen
- 54: Diffusion
- 56: Temperaturbeaufschlagung
- 58: externes Magnetfeld
- 60: UV-Strahlung
- 62: gehärtetes Kapselinneres
- 64: anderes externes Magnetfeld
- 70: externes Magnetfeld
- 72, 74: Teilbereiche
- 76,78: Motivbereiche
- 80: Umgebungsbereiche
- 90: Mikrokapseln
- 92: externes Magnetfeld
- 94: Trägerflüssigkeit
- 96: Eisenoxid-Nanopartikeln
- 98: photonischer Kristall
- 100: Identifikationskarte
- 102: Seriennummer
- 104: Portrait
- 106: Sicherheitselement
- 108: Motivbereich
- 110: Kartenaufnahme
- 112: Permanentmagnet

## Patentansprüche

1. Verfahren zur Herstellung eines optisch variablen Sicherheitselements (12) mit einer mikrokapselbasierten Farbschicht (36) mit einem Motivbereich (14) in Form von Mustern, Zeichen oder einer Codierung, bei dem
D) eine Druckfarbe bereitgestellt wird, die in einem Bindemittel (38) eine Vielzahl von Mikrokapseln (40) enthält, die jeweils eine semipermeable Kapselhülle (42) aufweisen, die für vorbestimmte reaktive Substanzen (52) durchlässig ist, und die eine in der Kapselhülle (42) eingeschlossene Trägerflüssigkeit (44) und einen durch externe elektrische oder magnetische Felder(58) beeinflussbaren Kapselinhalt (46, 96) aufweisen, welcher in der Mikrokapsel (40) im Wesentlichen frei beweglich ist,
A) die Druckfarbe auf einen Untergrund (32, 34) aufgebracht wird um eine mikrokapselbasierte Farbschicht (36) zu bilden,
R) in dem Motivbereich (14) eine Schicht mit den vorbestimmten reaktiven Substanzen (52) auf die mikrokapselbasierte Farbschicht (36) aufgebracht wird, welche durch die semipermeablen Kapselhüllen (42) in die Mikrokapseln (40) der Farbschicht (36) eindringen,
M) in einem den Motivbereich (14) enthaltenden Teilbereich (72, 74) der Farbschicht (36) ein externes elektrisches oder magnetisches Feld (58) angelegt wird, um dort den beweglichen Kapselinhalt (46, 96) zu beeinflussen, und
H) die in die Mikrokapsel (40) eingedrungenen reaktiven Substanzen (52) gehärtet werden, um den Kapselinhalt (46, 96) in der Mikrokapsel (40) in seiner beeinflussten Lage zu fixieren.

2. Verfahren nach Anspruch 1, **dadurch gekennzeichnet, dass** in Schritt R) als reaktive Substanzen (52) hydrophobe Monomere aufgebracht werden, vorzugsweise mit einem Molekulargewicht unterhalb von 500 g/ mol und/oder mit einer Oberflächenspannung von weniger als 38 dyn/cm.

3. Verfahren nach Anspruch 1 oder 2, **dadurch gekennzeichnet, dass** nach dem Aufbringen der reaktiven Substanzen (52) in Schritt R) eine vorbestimmte Wartezeit abgewartet wird, bevor in Schritt H) gehärtet wird, wobei bevorzugt während der Wartezeit eine Temperaturbeaufschlagung (56) erfolgt, insbesondere durch Beaufschlagung mit Infrarotstrahlung und/oder Heißluft.

4. Verfahren nach wenigstens einem der Ansprüche 1 bis 3, **dadurch gekennzeichnet, dass** die Härtung in Schritt H) erfolgt, während das externe elektrische oder magnetische Feld (58) des Schritts M) angelegt ist.

5. Verfahren nach wenigstens einem der Ansprüche 1 bis 4, **dadurch gekennzeichnet, dass** in Schritt D) eine Druckfarbe bereitgestellt wird, bei der die Mikrokapseln (40) als Kapselinhalt magnetisch ausrichtbare, nicht-sphärische Pigmente (46) enthalten, die in der Trägerflüssigkeit (44) der Mikrokapseln (40) im Wesentlichen frei drehbar und durch ein äußeres Magnetfeld (50) reversibel ausrichtbar sind, und dass in Schritt M) in dem den Motivbereich (14) enthaltenden Teilbereich (72, 74) der Farbschicht (36) ein externes magnetisches Feld (58) angelegt wird, um dort die drehbaren Pigmente (46) auszurichten.

6. Verfahren nach Anspruch 5, **dadurch gekennzeichnet, dass** die drehbaren Pigmente im Schritt M) zumindest in einem Teil des Motivbereichs (14) parallel zur Ebene der Farbschicht (36) ausgerichtet werden und im Schritt H) in dieser Ausrichtung fixiert werden.

7. Verfahren nach Anspruch 5 oder 6, **dadurch gekennzeichnet, dass** die drehbaren Pigmente im Schritt M) zumindest in einem Teil des Motivbereichs (14) senkrecht zur Ebene der Farbschicht (36) ausgerichtet werden und im Schritt H) in dieser Ausrichtung fixiert werden.

8. Verfahren nach wenigstens einem der Ansprüche 1 bis 4, **dadurch gekennzeichnet, dass** in Schritt D) eine Druckfarbe bereitgestellt wird, bei der die Mikrokapseln (40) als Kapselinhalt (46, 96) magnetische Nanopartikel (96) oder Mikropartikel enthalten, die in einem externen Magnetfeld (50) in der Trägerflüssigkeit (44) der Mikrokapseln (40) reversibel eine Überstruktur, insbesondere einen photonischen Kristall (98) ausbilden, und dass in Schritt M) in dem den Motivbereich (14) enthaltenden Teilbereich (72, 74) der Farbschicht (36) ein externes magnetisches Feld (58) angelegt wird, um dort eine Überstruktur, insbesondere einen photonischen Kristall (98) aus den magnetischen Nanopartikeln zu bilden.

9. Verfahren nach wenigstens einem der Ansprüche 1 bis 8, **dadurch gekennzeichnet, dass** im Schritt A) zunächst eine Untergrundschicht auf ein Substrat aufgebracht wird, vorzugsweise in Form einer Information, insbesondere einem Muster, Zahlen und/ oder Buchstaben, einem Portrait oder dergleichen, und dass die Druckfarbe auf die Untergrundschicht aufgebracht wird.

10. Verfahren nach wenigstens einem der Ansprüche 1 bis 9, **dadurch gekennzeichnet, dass** die Druckfarbe im Schritt A) im Sieb- oder Flexodruck aufgebracht wird.

11. Optisch variables Sicherheitselement (12) zur Absicherung von Wertgegenständen mit
einer mikrokapselbasierten Farbschicht (36), die in einem Bindemittel (38) eine Vielzahl von Mikrokapseln (40) enthält, die jeweils eine semipermeable Kapselhülle (42) aufweisen, die für vorbestimmte reaktive Substanzen (52) durchlässig ist, und die eine in der Kapselhülle (42) eingeschlossene Trägerflüssigkeit (44) und einen durch externe elektrische oder magnetische Felder (58) beeinflussbaren Kapselinhalt (46, 96) aufweisen, welcher in der Mikrokapsel (40) im Wesentlichen frei beweglich ist, so dass, wenn in einem Motivbereich (14) eine Schicht mit den vorbestimmten reaktiven Substanzen (52) auf die mikrokapselbasierte Farbschicht (36) aufgebracht ist, welche durch die semipermeablen Kapselhüllen (42) in die Mikrokapseln (40) der Farbschicht (36) eindringen, in dem Motivbereich (14) der Kapselinhalt (46, 96) in den Mikrokapseln (40) fixiert ist.

12. Optisch variables Sicherheitselement (12) zur Absicherung von Wertgegenständen mit einer mikrokapselbasierten Farbschicht (36), die in einem Bindemittel (38) eine Vielzahl von Mikrokapseln (40) enthält, die jeweils eine semipermeable Kapselhülle (42) aufweisen, die für vorbestimmte reaktive Substanzen (52) durchlässig ist, und die eine in der Kapselhülle (42) eingeschlossene Trägerflüssigkeit (44) und einen durch externe elektrische oder magnetische Felder (58) beeinflussbaren Kapselinhalt (46, 96) aufweisen, welcher in der Mikrokapsel (40) im Wesentlichen frei beweglich ist, und die einen Motivbereich (14) mit unterschiedlichem visuellem Eindruck enthält, wobei
- die mikrokapselbasierte Farbschicht (36) außerhalb des Motivbereichs (14) in einem Bindemittel (38) eine Vielzahl von Mikrokapseln (40) enthält, die einen durch externe elektrische oder magnetische Felder (58) beeinflussbaren Kapselinhalt (46, 96) aufweisen, welcher in der Mikrokapsel (40) im Wesentlichen frei beweglich ist, und
- die mikrokapselbasierte Farbschicht (36) innerhalb des Motivbereichs (14) in einem Bindemittel (38) eine Vielzahl von Mikrokapseln (40) enthält, deren Kapselinhalt (46, 96) fixiert ist, indem eine Schicht mit den vorbestimmten reaktiven Substanzen (52) auf die mikrokapselbasierte Farbschicht (36) aufgebracht ist, welche durch die semipermeablen Kapselhüllen (42) in die Mikrokapseln (40) der Farbschicht (36) eingedrungen sind.

13. Sicherheitselement (12) nach Anspruch 11 oder 12, **dadurch gekennzeichnet, dass** die semipermeablen Kapselhüllen (42) für hydrophobe Monomere durchlässig sind, vorzugsweise für hydrophobe Monomere mit einem Molekulargewicht unterhalb von 500 g/mol und/oder mit einer Oberflächenspannung von weniger als 38 dyn/ cm, und/ oder dass die mikrokapselbasierte Farbschicht (36) auf einer informationsführenden Untergrundschicht, insbesondere einer Siebdruck-, Flexodruck- oder Stichtiefdruckschicht, aufgebracht ist und/ oder dass die mikrokapselbasierte Farbschicht (36) mit einer thermochromen oder magnetischen Untergrundschicht kombiniert ist.

14. Sicherheitsanordnung zur Absicherung von Sicherheitspapieren, Wertdokumenten, Datenträgern und dergleichen mit einem nach einem der Ansprüche 1 bis 10 herstellbaren Sicherheitselement (12) oder einem Sicherheitselement (12) nach einem der Ansprüche 12 bis 13 und mit einem Verifikationselement mit einem Magnetbereich, wobei bevorzugt in dem Magnetbereich magnetisches Material in Form von Mustern, Linien, Zeichen oder einer Codierung vorliegt und/ oder der Magnetbereich im Wesentlichen senkrecht zur Ebene des Verifikationselements magnetisiert ist.

15. Datenträger mit einem nach einem der Ansprüche 1 bis 10 herstellbaren Sicherheitselement (12), einem Sicherheitselement (12) nach einem der Ansprüche 12 bis 13 oder mit einer Sicherheitsanordnung nach Anspruch 14, wobei im letzteren Fall das Sicherheitselement (12) und das Verifikationselement der Sicherheitsanordnung bevorzugt geometrisch so auf dem Datenträger angeordnet sind, dass das Sicherheitselement (12) durch Biegen oder Falten des Datenträgers über das Verifikationselement bringbar ist.

## Claims

1. A method for manufacturing an optically variable security element (12) with a microcapsule-based ink layer (36) with a motif region (14) in the form of patterns, characters or a coding, in which
D) a printing ink is made available that contains in a binder (38) a multiplicity of microcapsules (40), each of which having a semi-permeable capsule shell (42) which is permeable to predetermined reactive substances (52), and having a carrier liquid (44) enclosed in the capsule shell (42) and a capsule content (46, 96) that can be influenced by external electric or magnetic fields (58) and is substantially freely movable in the microcapsule (40),
A) the printing ink is applied to a background (32, 34) to form a microcapsule-based ink layer (36),
R) in the motif region (14) a layer with the predetermined reactive substances (52) is applied to the microcapsule-based ink layer (36), which substances penetrate through the semi-permeable capsule shells (42) into the microcapsules (40) of the ink layer (36),
M) in a partial region (72, 74) of the ink layer (36) containing the motif region (14) an external electric or magnetic field (58) is applied in order to influence the movable capsule content (46, 96) there, and
H) the reactive substances (52) which have penetrated into the microcapsule (40) are cured in order to fix the capsule content (46, 96) in the microcapsule (40) in its influenced position.

2. The method according to claim 1, **characterized in that** in step R) as the reactive substances (52), hydrophobic monomers are applied, preferably with a molecular weight below 500 g/mol and/or with a surface tension of less than 38 dyn/cm.

3. The method according to claim 1 or 2, **characterized in that** after the application of the reactive substances (52) in step R) a predetermined waiting time is waited before the curing takes place in step H), wherein preferably during the waiting time, a temperature application (56) is effected, in particular by applying infrared radiation and/or hot air.

4. The method according to at least one of the claims 1 to 3, **characterized in that** the curing in step H) is effected while the external electric or magnetic field (58) of step M) is applied.

5. The method according to at least one of the claims 1 to 4, **characterized in that** in step D), a printing ink is made available in which the microcapsules (40) contain as the capsule content magnetically orientable, non-spherical pigments (46) that are substantially freely rotatable in the carrier liquid (44) of the microcapsules (40) and can be oriented reversibly by an external magnetic field (50), and that in step M) an external magnetic field (58) is applied in the partial region (72, 74) of the ink layer (36) containing the motif region (14) in order to orient the rotatable pigments (46) there.

6. The method according to claim 5, **characterized in that** the rotatable pigments in step M) are oriented at least in a part of the motif region (14) parallel to the plane of the ink layer (36) and in step H) are fixed in this orientation.

7. The method according to claim 5 or 6, **characterized in that** the rotatable pigments in step M) are oriented at least in a part of the motif region (14) perpendicularly to the plane of the ink layer (36) and in step H) are fixed in this orientation.

8. The method according to at least one of the claims 1 to 4, **characterized in that** in step D), a printing ink is made available, in which the microcapsules (40) contain as the capsule content (46, 96) magnetic nanoparticles (96) or microparticles, which in an external magnetic field (50) reversibly form a superstructure, in particular a photonic crystal (98), in the carrier liquid (44) of the microcapsules (40), and that in step M) an external magnetic field (58) is applied in the partial region (72, 74) of the ink layer (36) containing the motif region (14), in order to form a superstructure of the magnetic nanoparticles there, in particular a photonic crystal (98).

9. The method according to at least one of the claims 1 to 8, **characterized in that** in step A) firstly a background layer is applied to a substrate, preferably in the form of an information item, in particular a pattern, numbers and/or letters, a portrait or the like, and that the printing ink is applied to the background layer.

10. The method according to at least one of the claims 1 to 9, **characterized in that** in step A) the ink layer is applied by screen printing or flexographic printing.

11. An optically variable security element (12) for securing objects of value with a microcapsule-based ink layer (36) containing in a binder (38) a multiplicity of microcapsules (40), each having a semi-permeable capsule shell (42) which is permeable to predetermined reactive substances (52) and having a carrier liquid (44) enclosed in the capsule shell (42) and a capsule content (46, 96) that can be influenced by external electric or magnetic fields (58) and is substantially freely movable in the microcapsule (40), such that, when in a motif region (14) a layer with the predetermined reactive substances (52) is applied to the microcapsule-based ink layer (36), which substances penetrate through the semi-permeable capsule shells (42) into the microcapsules (40) of the ink layer (36), the capsule content (46, 96) is fixed in the microcapsules (40) in the motif region (14).

12. An optically variable security element (12) for securing objects of value, with a microcapsule-based ink layer (36) containing in a binder (38) a multiplicity of microcapsules (40), each of which having a semi-permeable capsule shell (42) which is permeable to predetermined reactive substances (52) and having a carrier liquid (44) enclosed in the capsule shell (42) and a capsule content (46, 96) that can be influenced by external electric or magnetic fields (58) and is substantially freely movable in the microcapsule (40), and containing a motif region (14) with a varying visual impression, wherein
- the microcapsule-based ink layer (36) outside of the motif region (14) contains in a binder (38) a multiplicity of microcapsules (40) having a capsule content (46, 96) that can be influenced by external electric or magnetic fields (58) and is substantially freely movable in the microcapsule (40), and
- the microcapsule-based ink layer (36) within the motif region (14) contains in a binder (38) a multiplicity of microcapsules (40), the capsule content (46, 96) of which is fixed by application of a layer with the predetermined reactive substances (52) to the microcapsule-based ink layer (36), said substances having penetrated through the semi-permeable capsule shells (42) into the microcapsules (40) of the ink layer (36).

13. The security element according to claim 11 or 12, **characterized in that** the semipermeable capsule shells (42) are permeable to hydrophobic monomers, preferably to hydrophobic monomers with a molecular weight below 500 g/mol and/or with a surface tension of less than 38 dyn/cm, and/or that the microcapsule-based ink layer (36) is applied to an information-carrying background layer, in particular a screen printing, flexographic printing or intaglio printing layer, and/or that the microcapsule-based ink layer (36) is combined with a thermochromic or magnetic background layer.

14. A security arrangement for securing security papers, value documents, data carriers and the like, with a security element (12) that can be manufactured in accordance with any of the claims 1 to 10 or a security element (12) according to any of the claims 12 to 13 and with a verification element with a magnetic region, wherein there is preferably magnetic material in the form of patterns, lines, characters or a coding present in the magnetic region and/or the magnetic region is magnetized substantially perpendicularly to the plane of the verification element.

15. A data carrier with a security element (12) that can be manufactured in accordance with any of the claims 1 to 10, a security element (12) according to any of the claims 12 to 13 or with a security arrangement according to claim 14, wherein in the latter case, the security element (12) and the verification element of the security arrangement preferably are so arranged geometrically on the data carrier that the security element (12) can be brought over the verification element by bending or folding the data carrier.

## Revendications

1. Procédé de fabrication d'un élément de sécurité (12) optiquement variable doté d'une couche d'encre (36) à base de microcapsules comprenant une zone de motif (14) sous forme de dessins, de caractères ou d'une codification, dans lequel
D) une encre d'impression est mise à disposition, laquelle, dans un liant (38), contient une pluralité de microcapsules (40) qui comportent respectivement une enveloppe de capsule (42) semi-perméable perméable à des substances réactives (52) prédéterminées et qui comportent un liquide porteur (44) emprisonné dans l'enveloppe de capsule (42) et un contenu de capsule (46, 96) influençable par des champs (58) électriques ou magnétiques externes et pouvant se mouvoir essentiellement librement dans la microcapsule (40),
A) l'encre d'impression est appliquée sur un fond (32, 34) afin de constituer une couche d'encre (36) à base de microcapsules,
R) dans la zone de motif (14), il est appliqué, sur la couche d'encre (36) à base de microcapsules, une couche dotée des substances réactives (52) prédéterminées qui, à travers les enveloppes de capsules (42) semi-perméables, pénètrent dans les microcapsules (40) de la couche d'encre (36),
M) dans une zone partielle (72, 74) de la couche d'encre (36) contenant la zone de motif (14), un champ (58) électrique ou magnétique externe est appliqué afin d'y influencer le contenu de capsule (46, 96) pouvant se mouvoir, et
H) les substances réactives (52) ayant pénétré dans la microcapsule (40) sont durcies afin de fixer dans sa position influencée le contenu de capsule (46, 96) dans la microcapsule (40).

2. Procédé selon la revendication 1, **caractérisé en ce que,** à l'étape R), en tant que substances réactives (52), ce sont des monomères hydrophobes qui sont appliqués, de préférence d'un poids moléculaire inférieur à 500 g /mol et/ou d'une tension superficielle inférieure à 38 dyn/cm.

3. Procédé selon la revendication 1 ou 2, **caractérisé en ce que,** après l'application des substances réactives (52) à l'étape R), un temps d'attente prédéterminé est respecté avant que les durcissement soit effectué à l'étape H), cependant que, de préférence, durant le temps d'attente, une mise en température (56) a lieu, en particulier par exposition à un rayonnement infrarouge et/ou à de l'air chaud.

4. Procédé selon au moins une des revendications de 1 à 3, **caractérisé en ce que** le durcissement a lieu à l'étape H) pendant que le champ (58) électrique ou magnétique externe de l'étape M) est appliqué.

5. Procédé selon au moins une des revendications de 1 à 4, **caractérisé en ce que,** à l'étape D), une encre d'impression est mise à disposition, dans laquelle les microcapsules (40) contiennent en tant que contenu de capsules des pigments (46) non sphériques magnétiquement orientables qui peuvent tourner essentiellement librement dans le liquide porteur (44) des microcapsules (40) et peuvent être orientés réversiblement par un un champ magnétique (50) extérieur, et **en ce que**, à l'étape M), dans la zone partielle (72, 74) de la couche d'encre (36) incluant la zone de motif (14), un champ (58) magnétique externe est appliqué afin d'y orienter les pigments (46) pouvant tourner.

6. Procédé selon la revendication 5, **caractérisé en ce que** les pigments (46) pouvant tourner sont, à l'étape M), au moins dans une partie de la zone de motif (14), orientés parallèlement au plan de la couche d'encre (36) et sont, à l'étape H), fixés dans cette orientation.

7. Procédé selon la revendication 5 ou 6, **caractérisé en ce que** les pigments (46) pouvant tourner sont, à l'étape M), au moins dans une partie de la zone de motif (14), orientés perpendiculairement au plan de la couche d'encre (36) et sont, à l'étape H), fixés dans cette orientation.

8. Procédé selon au moins une des revendications de 1 à 4, **caractérisé en ce que,** à l'étape D), une encre d'impression est mise à disposition, dans laquelle les microcapsules (40) contiennent en tant que contenu de capsules (46, 96) des nanoparticules magnétiques (96) ou microparticules qui, dans un champ magnétique (50) externe, constituent réversiblement, dans le liquide porteur (44) des microcapsules (40), une surstructure, en particulier un cristal (98) photonique, et **en ce que**, à l'étape M), dans la zone partielle (72, 74) de la couche d'encre (36) contenant la zone de motif (14), un champ (58) magnétique externe est appliqué afin d'y constituer à partir des nanoparticules magnétiques une surstructure, en particulier un cristal (98) photonique.

9. Procédé selon au moins une des revendications de 1 à 8, **caractérisé en ce que,** à l'étape A), tout d'abord une couche de fond est appliquée sur un substrat, de préférence sous forme d'une information, en particulier d'un dessin, de chiffres et/ou de caractères, d'un portrait ou entité similaire, et **en ce que** l'encre d'impression est appliquée sur la couche de fond.

10. Procédé selon au moins une des revendications de 1 à 9, **caractérisé en ce que** l'encre d'impression est appliquée à l'étape A) par sérigraphie ou flexographie.

11. Elément de sécurité (12) optiquement variable destiné à la protection d'objets de valeur, comprenant
une couche d'encre (36) à base de microcapsules, laquelle contient, dans un liant (38), une pluralité de microcapsules (40) qui comportent respectivement une enveloppe de capsule (42) semi-perméable perméable à des substances réactives (52) prédéterminées et qui comportent un liquide porteur (44) emprisonné dans l'enveloppe de capsule (42) et un contenu de capsule (46, 96) influençable par des champs (58) électriques ou magnétiques externes qui peut se mouvoir essentiellement librement dans la microcapsule (40), de telle sorte que, quand, dans une zone de motif (14), il est appliqué sur la couche d'encre (36) à base de microcapsules une couche dotée des substances réactives (52) prédéterminées qui, à travers les enveloppes de capsules (42) semi-perméables, pénètrent dans les microcapsules (40) de la couche d'encre (36), le contenu de capsules (46, 96) est, dans la zone de motif (14), fixé dans les microcapsules (40).

12. Elément de sécurité (12) optiquement variable destiné à la protection d'objets de valeur, comprenant une couche d'encre (36) à base de microcapsules, laquelle contient, dans un liant (38), une pluralité de microcapsules (40) qui comportent respectivement une enveloppe de capsule (42) semi-perméable perméable à des substances réactives (52) prédéterminées et qui comportent un liquide porteur (44) emprisonné dans l'enveloppe de capsule (42) et un contenu de capsule (46, 96) influençable par des champs (58) électriques ou magnétiques externes qui peut se mouvoir essentiellement librement dans la microcapsule (40), et laquelle inclut une zone de motif (14) présentant des aspects visuels différents, cependant que
- la couche d'encre (36) à base de microcapsules contient, à l'extérieur de la zone de motif (14), dans un liant (38), une pluralité de microcapsules (40) qui comportent un contenu de capsule (46, 96) influençable par des champs (58) électriques ou magnétiques externes qui peut se mouvoir essentiellement librement dans la microcapsule (40), et
- la couche d'encre (36) à base de microcapsules contient, à l'intérieur de la zone de motif (14), dans un liant (38), une pluralité de microcapsules (40) dont le contenu de capsule (46, 96) est fixé, ce qui est obtenu par le fait qu'il est appliqué sur la couche d'encre (36) à base de microcapsules une couche dotée des substances réactives (52) prédéterminées, lesquelles ont pénétré dans les microcapsules (40) de la couche d'encre (36) à travers les enveloppes de capsules (42) semi-perméables.

13. Elément de sécurité (12) selon la revendication 11 ou 12, **caractérisé en ce que** les enveloppes de capsules (42) semi-perméables sont perméables aux monomères hydrophobes, de préférence aux monomères hydrophobes d'un poids moléculaire inférieur à 500 g /mol et/ou d'une tension superficielle inférieure à 38 dyn/ cm, et/ou **en ce que** la couche d'encre (36) à base de microcapsules est appliquée sur une couche de fond conductrice d'informations, en particulier une couche d'impression obtenue par sérigraphie, par flexographie ou par impression en creux par gravure, et/ou **en ce que** la couche d'encre (36) à base de microcapsules est combinée avec une couche de fond thermochromique ou magnétique.

14. Agencement de sécurité destiné à la protection de papiers de sécurité, documents de valeurs, supports de données ou objets similaires, doté d'un élément de sécurité (12) pouvant être fabriqué selon une des revendications de 1 à 10 ou d'un élément de sécurité (12) selon une des revendications de 12 à 13 et comprenant un élément de vérification ayant une zone magnétique, cependant que, de préférence, dans la zone magnétique, il y a du matériau magnétique sous forme de dessins, de lignes, de caractères ou d'une codification, et/ou que la zone magnétique est magnétisée essentiellement perpendiculairement au plan de l'élément de vérification.

15. Support de données doté d'un élément de sécurité (12) pouvant être fabriqué selon une des revendications de 1 à 10, d'un élément de sécurité (12) selon une des revendications de 12 à 13 ou d'un agencement de sécurité selon la revendication 14, cependant que, dans le dernier cas, l'élément de sécurité (12) et l'élément de vérification de l'agencement de sécurité sont de préférence agencés de telle façon géométriquement sur le support de données que l'élément de sécurité (12) peut être amené au-dessus de l'élément de vérification en courbant ou en pliant le support de données.
